# EUROPÄISCHE PATENTSCHRIFT

(11) **EP 0 419 482 B1**
(45) Veröffentlichungstag und Bekanntmachung des Hinweises auf die Patenterteilung: **12.05.1993**
(21) Anmeldenummer: 89901454.2
(22) Anmeldetag: 19.01.1989
(51) Int. Cl.: F16B 13/14, E21D 20/02

(54) **VERANKERUNGSPATRONE**
ANCHORING CARTRIDGE
CARTOUCHE DE FIXATION

(30) Priorität: 02.03.1988 DE 3806598
(43) Veröffentlichungstag der Anmeldung: 03.04.1991
(73) Patentinhaber: UPAT GMBH & CO, D-79312 Emmendingen (DE)
(72) Erfinder: WEBER, Christian, D-7830 Emmendingen (DE); RINKLAKE, Manfred, D-7830 Emmendingen 14 (DE); STEURER, Paul, D-7835 Teningen (DE); FRISCHMANN, Albert, D-7832 Kenzingen (DE)
(74) Vertreter: Rackette, Karl, Dipl.-Phys. Dr.-Ing
(86) Internationale Anmeldenummer: DE8900025
(87) Internationale Veröffentlichungsnummer: WO8908202

(56) Entgegenhaltungen:
- CH-A- 473 305
- DE-A- 2 705 484
- GB-A- 1 521 902
- GB-A- 2 054 784

## Beschreibung

Die Erfindung betrifft eine Verankerungspatrone mit einem Zweikomponentenkleber aus einem Harz und einem Härter, mit einer die erste Komponente enthaltenden rohrförmigen Innenpatrone, die von einer koaxial fixierten, einen Füllstoff und die zweite Komponente enthaltenden rohrförmigen Außenpatrone umgeben ist, wobei das vordere Ende der Innenpatrone in einem vorgegebenen Abstand von dem vorderen Ende der Außenpatrone endet.

Bei einer derartigen, aus der GB-A-1 521 902 bekannten Verankerungspatrone befindet sich der Harz zusammen mit inerten Substanzen im Ringspalt zwischen der Innenpatrone und der Außenpatrone. Die Innenpatrone enthält dabei ein Pulver zum Polymerisieren des Harzes.

Eine weitere Ankerbefestigung mit einer Zwei-Komponenten Kleber-Patrone ist aus der DE-A-27 05 484 bekannt. Die Lage der Innenpatrone innerhalb der Außenpatrone ist dort undefiniert und hängt von den Zufälligkeiten der Herstellung und des Transportes zum Verwendungsort ab. Infolge der jeweils unterschiedlichen Lage der Innenpatrone innerhalb der Außenpatrone ergibt sich eine ungleichmäßige Verteilung der Füllstoffe während des Mischvorganges und dadurch eine von Zufällen abhängige Harzsättigung des Mörtels entlang der gesamten Verbundlänge zwischen der Ankerstange und der Bohrlochwandung.

Wenn bei einer Überkopfmontage jeweils die Außenpatrone zerstört wird, läuft das Harz aus dem Ringspalt zwischen der Innenpatrone und der Außenpatrone sofort heraus, ohne wesentlich mit dem in der Außenpatrone vorhandenen Härter in Berührung zu kommen.

Ausgehend von diesem Stand der Technik ist es Aufgabe der vorliegenden Erfindung, eine nagelbare Verankerungspatrone für die Verankerung von Befestigungselementen zu schaffen, die auch bei einer Überkopfmontage zuverlässig eingesetzt werden kann.

Diese Aufgabe wird erfindungsgemäß dadurch gelöst, daß der Härter und der Füllstoff im vorderen Bereich des Ringspaltes zwischen der mit Harz gefüllten Innenpatrone und der Außenpatrone mit einer feineren Körnung als im hinteren Bereich des Ringspaltes vorgesehen sind und daß der Ringspalt im vorderen Bereich zwei- bis dreimal und im hinteren Bereich ein- bis dreimal so groß wie die Korngröße des Füllstoffes ist.

Bei einem zweckmäßigen Ausführungsbeispiel erfolgt eine Fixierung des hinteren Endes der Innenpatrone in der Außenpatrone durch eine thermisch behandelte Füllstoffschicht. Bei einem anderen Ausführungsbeispiel dient eine Abschlußkappe gleichzeitig zum Verschließen der Innen- und Außenpatrone sowie zu deren gegenseitiger Fixierung.

Weitere zweckmäßige Ausführungsbeispiele und Weiterbildungen der Erfindungen sind in den Unteransprüchen gekennzeichnet.

Nachfolgend werden Ausführungsbeispiele der Erfindung anhand der Zeichnung näher beschrieben. Es zeigen:
- Fig. 1: eine Verankerungspatrone gemäß der Erfindung im Längsschnitt,
- Fig. 2: die Verankerungspatrone gemäß Fig. 1 im Querschnitt,
- Fig. 3: eine auf die Verankerungspatrone gemäß Fig. 1 aufsetzbare Abschlußkappe im Längsschnitt,
- Fig. 4: eine Draufsicht auf die Abschlußkappe,
- Fig. 5: eine Abschlußkappe zum Einstecken in ein nicht abgeschweißtes rückwertiges Ende einer Außenpatrone einer gegenüber Fig. 1 abgewandelten Verankerungspatrone im Längsschnitt,
- Fig. 6: eine Verankerungspatrone mit einer Innenpatrone und einer Außenpatrone, die durch eine gemeinsame Abschlußkappe abgedeckt und gegeneinander fixiert sind, im Längsschnitt,
- Fig. 7: die Abschlußkappe der Verankerungspatrone gemäß Fig. 6 in vergrößerter Darstellung im Längsschnitt und
- Fig. 8: eine Draufsicht auf die Abschlußkappe zur Veranschaulichung der Lage von Sollbruchstellen.

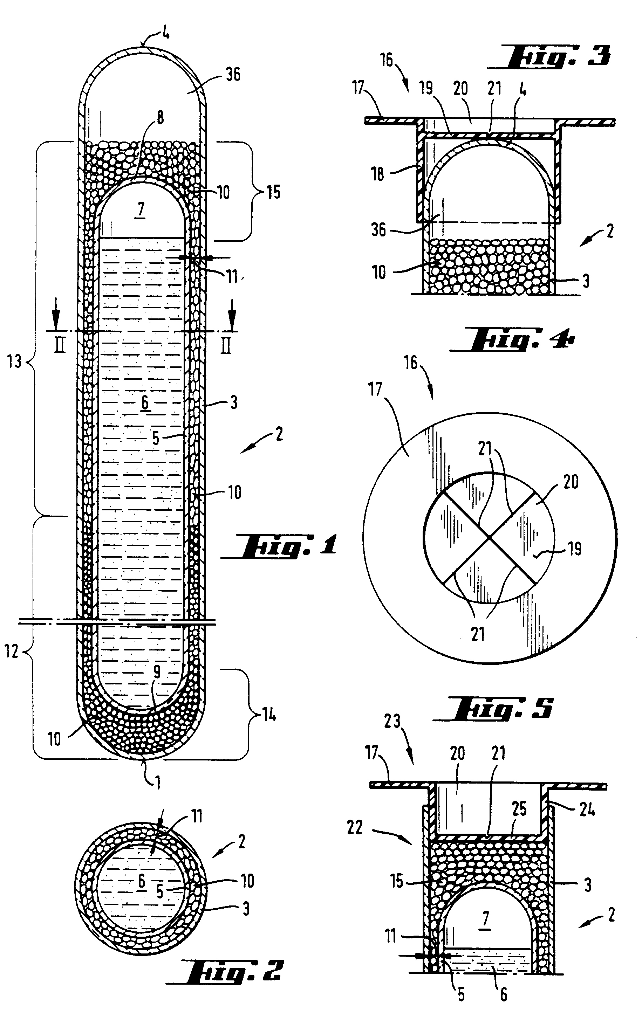

Die in Fig. 1 mit ihrem vorderen Ende 1 nach unten weisend dargestellte Verankerungspatrone 2 dient zum Befestigen eines in der Zeichnung nicht dargestellten Ankers in einem in der Zeichnung ebenfalls nicht dargestellten Bohrloch, in das die Verankerungspatrone 2 beim Setzvorgang mit ihrem vorderen Ende 1 vorauszeigend in das Bohrloch eingeführt wird, um danach beim Einschlagen des Ankers ein Aktivieren der in der Verankerungspatrone 2 enthaltenen Komponenten zu bewirken. Das in der Zeichnung nicht dargestellte Bohrloch zum Befestigen des nicht dargestellten Ankers kann bezüglich der Schwerkraft beliebig verlaufen, insbesondere ist die Verankerungspatrone 2 auch für horizontal verlaufende Bohrlöcher sowie vertikal von unten nach oben in einer Decke verlaufende Bohrlöcher geeignet, wobei aufgrund ihrer besonderen Ausbildung ein Auslaufen der in ihr enthaltenen Komponenten auch bei einer Überkopfmontage wirksam verhindert wird.

Die in Fig. 1 dargestellte Verankerungspatrone 2 wird durch Einschlagen eines beliebigen Ankers aktiviert und ist insbesondere für Bohrlöcher größeren Durchmessers vorgesehen. Als Anker kann eine Ankerstange M 16 verwendet werden. Die Verankerungspatrone 2 eignet sich aber nicht nur für Gewindestangen, sondern auch für Anker, deren Mantelfläche mehrere glatte Konusabschnitte aufweist. Das Einschlagen des Ankers erfolgt beispielsweise von Hand mit Hilfe eines Handhammers, ohne daß es einer Schlagbohrmaschine bedarf, um eine gute Durchmischung der Komponenten zu erreichen.

Die in Fig. 1 als Ausführungsbeispiel dargestellte Patrone 2 verfügt über eine Außenpatrone 3, die beim Einsatz einer Ankerstange M 16 eine Länge von 125 mm und einen Durchmesser von 16,7 mm aufweist. Die Außenpatrone 3 ist sowohl an ihrem vorderen Ende 1 als auch an ihrem rückwärtigen Ende 4 kalottenförmig oder halbkugelförmig ausgebildet. Das rückwärtige Ende 4 ist bei dem in Fig. 1 dargestellten Ausführungsbeipsiel abgeschweißt.

Wie man in Fig. 1 erkennt, ist in der Außenpatrone 3 eine Innenpatrone 5 angeordnet, deren Länge 105 mm und deren Durchmesser 12,6 mm beträgt, wenn die Verankerungspatrone 2 für die Verwendung mit einer Konusstange mit Gewinde M 16 außerhalb des Bohrloches vorgesehen ist.

Der Inhalt der Innenpatrone 5 besteht aus 8,2 g aminvorbeschleunigtem Epoxyacrylatharz, das bei der in Fig. 1 dargestellten Lage mit dem nach unten in Schwerkraftrichtung weisenden vorderen Ende 1 oberhalb der Harzkomponente 6 einen Luftraum 7 in der Nähe des hinteren Endes 8 der Innenpatrone 5 übrig läßt. Der Luftraum 7 ändert selbstverständlich seine Lage je nach der Lage der Verankerungspatrone 2.

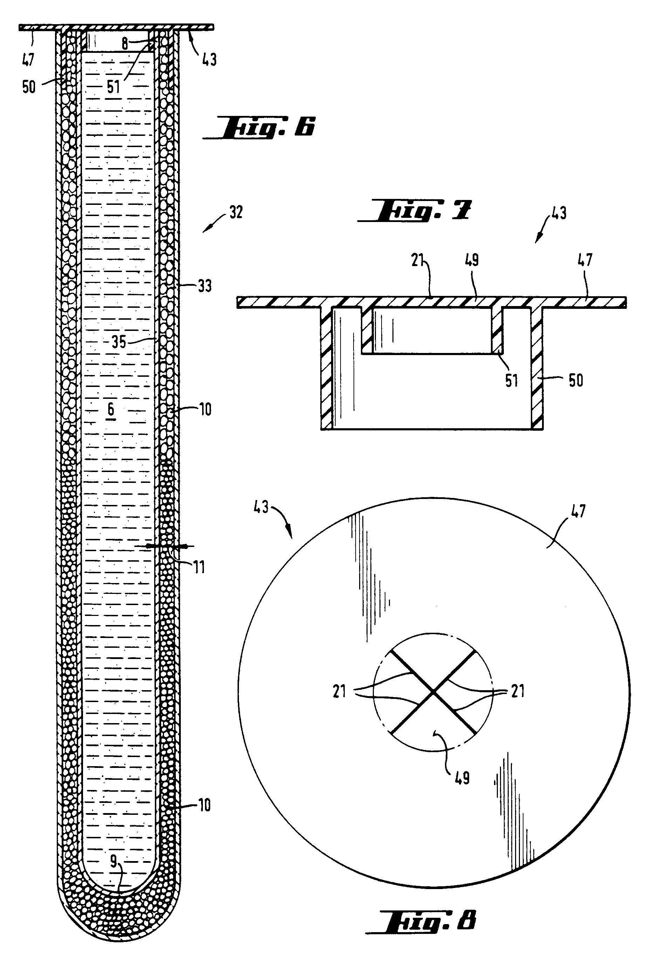

Die Außenpatrone 3 sowie die Innenpatrone 5 bestehen aus Glas, das beim Einschlagen des Ankers zerbricht. Weder das hintere Ende 8 noch das vordere Ende 9 der Innenpatrone 5 berührt das vordere Ende 1 bzw. das hintere Ende 4 der Außenpatrone 3. Die Innenpatrone 5 wird aber nicht nur in axialer Richtung, sondern auch in radialer Richtung von der Außenpatrone 3 auf einen definierten Abstand gehalten, was in Fig. 2, die einen Querschnitt durch die Verankerungspatrone 2 zeigt, deutlich zu sehen ist. Die Innenpatrone 5 ist konzentrisch in der Außenpatrone 3 fixiert.

Zur Fixierung der Innenpatrone 5 in der Außenpatrone 3 dient ein Füllstoff 10. Bei dem Füllstoff 10 handelt es sich vorzugsweise um mit Benzoylperoxid beschichteten Quarzsand einer Korngröße zwischen 0,5 und 1,2 mm und einer Menge von 9,0 g, wenn die oben erwähnten Abmessungen und der oben erwähnte Inhalt der Innenpatrone 5 für eine Ankerstange M 16 vorgesehen sind.

Wenn die nagelbare Verankerungspatrone 2 durch Einschlagen eines Ankers aktiviert wird, reagieren die Harzkomponente 6 der Innenpatrone 5 und die in der Außenpatrone 3 vorhandenen Stoffe miteinander. Die nachfolgend beschriebene Fixierung der Komponenten in der ganzen Länge der Verankerungspatrone 2 führt dabei einerseits zu einer unproblematischen Montage und andererseits zu hohen Verankerungswerten.

Der im Ringraum 11 zwischen der Innenpatrone 5 und der Außenpatrone 3 vorhandene Füllstoff 10 dient zum Fixieren der Lage der Innenpatrone 5 innerhalb der Außenpatrone 3. Der Füllstoff 10 hat chemisch überall die gleiche Zusammensetzung, jedoch zweckmäßigerweise nicht überall die gleiche Körnung. Wie in Fig. 1 veranschaulicht ist, ist im vorderen Breich 12 eine feinere Körnung der Füllstoffkörner des Füllstoffes 10 vorhanden. Im hinteren Bereich 13 ist die Körnung der mit peroxidischen Härter mittels eines Haftmittels, z.B. Phtalsäureester beschichteten Füllstoffkörner des Füllstoffes 10 größer. Die Innenpatrone 5 ist somit mit dem auf den Füllstoff 10 mit verschiedenen Korngrößen aufgetragenen Härter gleichmäßig umhüllt. Das vordere Ende 9 der Innenpatrone 5 ist dabei durch eine Fixierungsschicht 14, die sich über etwa 5 bis 10 % der gesamten Füllhöhe des vorderen Bereichs 10 und des hinteren Bereichs 13 erstreckt, fixiert. Die bezüglich ihrer Höhe definierte Fixierungsschicht 14 besteht dabei aus einer sich durch die Volumenverhältnisse ergebenden definierten mit dem Härter beschichteten Füllstoffmenge.

Die die Harzkomponente 6 enthaltende Innenpatrone 5 wird bis etwa zur Mitte vom Füllstoff 10 mit der feineren Körnung umgeben. Die Korngröße des mit dem Härter beschichteten Füllstoffes 10 ist dabei so gewählt, daß sich diese zur Breite des Ringspaltes zwischen der Innenpatrone 5 und der Außenpatrone 3 im vorderen Bereich 12 wie 1 : 2 bis 1 : 3 verhält. Im hinteren Bereich 13 mit der größeren Körnung beträgt das Verhältnis zwischen der Korngröße und der Breite des Ringspaltes 11 1 : 1 bis 1 : 3. Auf diese Weise wird beim Einschlagen des Ankers eine gleichmäßige Verteilung der Masse und eine gute Zentrierung des Ankers erreicht.

Die gleichmäßige Umhüllung der Innenpatrone 5 im hinteren Bereich 13 setzt sich bis zu einer besonders thermisch behandelten Füllstoffschicht 15 fort, die das hintere Ende 8 der Innenpatrone 5 in der in Fig. 1 dargestellten Weise umgibt. Die thermisch behandelte Füllstoffschicht im rückwärtigen Bereich schließt den Füllstoff ab und sichert die Lage der Innenpatrone 5 innerhalb der Außenpatrone 3. Durch die Ringspaltanordnung des Füllstoffes 10 um die als Harzpatrone dienende Innenpatrone 5 wird beim Einschlagen des Ankers eine zentrische Führung des Ankers erreicht und dadurch eine homogene Mörtelstruktur auf der gesamten Bohrlochlänge erzielt. Wenn beim Einschlagen des Ankers beide Glaspatronen, d.h. die Außenpatrone 3 und die Innenpatrone 5 zerstört werden, umfließt das Harz der Harzkomponente 6 die ringförmig angeordneten Füllstoffe 10. Durch das Eintreiben des Ankers, der in seinem Durchmesser sowohl auf den Bohrlochdurchmesser als auch auf die Durchmesser der Innenpatrone 5 und der Außenpatrone 3 abgestimmt ist, wird ebenfalls ein Ringspalt erzeugt, der den ringförmig angeordneten Füllstoff 10 aufnimmt. Durch diese Abstimmung erfolgt eine Verdichtung des Inhalts der Verankerungspatrone 2. Die flüssigen Bestandteile umspülen den mit dem Härter beschichteten Füllstoff 10 und erhalten somit eine gleichmäßige Konzentration des Härters während des gesamten Einschlagvorgangs. Dabei verhindert die thermisch behandelte Füllstoffschicht 15 mit dem aufgetragenen Härter ein Auslaufen der Komponenten während des Setzvorganges bei einer Überkopfmontage.

Die thermisch behandelte Füllstoffschicht 15 erstreckt sich über etwa 5 bis 30 % der Füllhöhe und schafft zusammen mit der bereits erwähnten Fixierungsschicht 14 eine optimale Bedingung für eine gute Vermischung der Komponenten. Um einen niedrigen Erweichungspunkt bei der thermischen Fixierung innerhalb der Füllstoffschicht 15 zu erhalten, ist dem Füllstoff 10 ein Gemenge beigemischt, dessen eine Komponente einen Schmelzpunkt von mehr als 60° und dessen andere Komponente einen Schmelzpunkt von weniger als 20° aufweist. Das Verhältnis der Komponente mit dem niedrigen Schmelzpunkt zur Komponente mit dem höheren Schmelzpunkt beträgt dabei 1 : 2 bis 1 : 4. Von besonderem Vorteil ist es, wenn diesem Gemenge und somit dem Füllstoff 10 ein so großer Anteil von Gips beigemischt wird, daß ein Pudereffekt erreicht wird.

Oberhalb der thermisch behandelten und dadurch zusammengebackenen Füllstoffschicht 15 befindet sich in der Außenpatrone 3 ein Luftraum 36, der im Gegensatz zum Luftraum 7 unabhängig von der Lage der Verankerungspatrone 2 die in Fig. 1 dargestellte Gestalt hat. Die Innenpatrone 5 ist somit dauerhaft in der Außenpatrone 3 fixiert, wodurch sich beim Einschlagen des Ankers eindeutige mechanische und chemische Verhältnisse ergeben.

Um das Einsetzen der Verankerungspatrone 2 und das Einschlagen des Ankers zu erleichtern, ist am rückwärtigen Ende 4 der Verankerungspatrone 2 eine in Fig. 3 dargestellte Abschlußkappe 16 vorgesehen. Die Abschlußkappe 16 verfügt über einen radial abstehenden Anschlagring 17, der sicherstellt, daß die Verankerungspatrone 2 mit ihrem vorderen Ende 1 nach vorne weisend in das Bohrloch eingesteckt wird. Wie man in Fig. 3 erkennt, hat die Abschlußkappe 16 eine rohrförmige Gestalt, wobei der Anschlagring 17 flanschartig an dem vom vorderen Ende 1 wegweisenden Ende eines Rohrabschnittes 18 angeordnet ist. Gegenüber dem Anschlagring 17 nach innen versetzt, ist ein scheibenförmiger Boden 19 vorgesehen, der gegen das rückwärtige Ende 4 der Außenpatrone 3 angedrückt ist. Der Rohrabschnitt 18 hat einen Innendurchmesser, der eine ausreichende Verklemmung mit der Außenpatrone 3 sicherstellt.

Die Abschlußkappe 16 überdeckt somit das gesamte abgeschweißte Ende der Außenpatrone 3. Durch die vertiefte Anordnung des Bodens 19 wird eine Vertiefung 20 gebildet, die zu Beginn des Einschlagens des Ankers eine Führung darstellt. Um das Einschlagen des Ankers durch den Boden 20 zu erleichtern, ist dieser mit Sollbruchstellen 21 versehen, die in Fig. 4 dargestellt sind, und sich linienförmig und radial über dem Boden 19 erstrecken.

In Fig. 5 ist das rückwärtige Ende 22 einer Außenpatrone 3 dargestellt, die nicht durch Abschweißen, sondern durch eine Abschlußkappe verschlossen ist. Bei dem in Fig. 5 dargestellten Ausführungsbeispiel einer Abschlußkappe 23 ist ebenfalls eine Vertiefung 20 vorgesehen, jedoch ist deren Tiefe größer als die Vertiefung 20 in der Abschlußkappe 16. Die Abschlußkappe 23 besteht aus einem Rohrabschnitt 24 mit einem Boden 25. Der Außendurchmesser des Rohrabschnittes 24 ist so gewählt, daß ein Verklemmen an der Innenwand der Außenpatrone 3 erfolgt. Die Abschlußkappe 23 ist dabei so weit in die Außenpatrone 3 eingedrückt, daß der Boden 25 gegen die Fixierungsschicht 14 anliegt. Die Abschlußkappe 23 dient somit einerseits zum Verschließen der Außenpatrone 3 und andererseits zum Fixieren des Inhalts der Außenpatrone 3. Aus diesem Grunde braucht die Fixierungsschicht 14 bei einem Ausführungsbeispiel gemäß Fig. 5 nicht unbedingt thermisch behandelt zu sein, um eine Fixierung der Innenpatrone 5 sicherzustellen.

Die Fig. 6 bis 8 zeigen ein weiteres Ausführungsbeispiel einer Verankerungspatrone 32, die im wesentlichen wie die oben beschriebene Verankerungspatrone 2 ausgebildet ist, wobei jedoch das hintere Ende 8 der Innenpatrone 5 und das rückwärtige Ende 4 der Außenpatrone 3 rohrförmig enden und nicht abgeschweißt sind. Zur Fixierung der koaxialen Lage der Innenpatrone 35 in der Außenpatrone 33 dient, wie oben beschrieben, ein Füllstoff 10 mit Bereichen unterschiedlicher Körnung, wobei jedoch die Funktion der thermisch behandelten Füllstoffschicht 15 durch eine Abschlußkappe 43 übernommen wird, die in Fig. 7 vergrößert dargestellt ist, und die außerdem, im Gegensatz zur Abschlußkappe 23 des in Fig. 5 dargestellten Ausführungsbeispiels, zusätzlich dazu dient, die Innenpatrone 35 zu verschließen. Wie die in Fig. 5 dargestellte Abschlußkappe 23 und die in Fig. 3 dargestellte Abschlußkappe 16 verfügt auch die Abschlußkappe 43 über einen Anschlagring 47 und Sollbruchstellen 21, was in Fig. 8 veranschaulicht ist.

Die Abschlußkappe 43 verfügt über einen Anschlagring 47, der radial nach innen in einen Boden 49 übergeht. Der Boden 49 überdeckt entlang einem äußeren Ringbereich den Ringspalt 10 zwischen der Innenpatrone 35 und der Außenpatrone 33. Wie man in den Fig. 6 und 7 erkennt, verfügt die Abschlußkappe 43 über einen äußeren längeren Rohrstutzen 50 und einen kürzeren inneren Rohrstutzen 51. Der Durchmesser des äußeren Rohrstutzens 50 ist so gewählt, daß seine Außenwand gegen die Innenwand der Außenpatrone 33 angedrückt ist. Der innere Rohrstutzen 51 ist kürzer und ragt in die Innenpatrone 35 in der Weise ein, daß er dichtend gegen die Innenwand der Innenpatrone 35 anliegt. Die Abschlußkappe 43 verklemmt somit mehrere Teile der Verankerungspatrone 32 in einer Weise, daß eine Fixierung der Einzelteile sichergestellt ist. Auf diese Weise ergeben sich beim Einschlagen eines Ankers definierte Verhältnisse, die für eine gute Vermischung der Komponenten und hohe Verankerungswerte ausschlaggebend sind. Die Abschlußkappe 43 hat somit nicht nur die Aufgabe, als Zentrierelement für eine Ankerstange zu dienen. Sie ist vorzugsweise aus Kunststoff hergestellt und verhindert auf einfache Weise ein verkehrtes Einschieben der Verankerungspatrone 32 in ein Bohrloch. Die Montage ist somit unproblematisch und wirtschaftlich, da eine Schlagbohrmaschine nicht erforderlich ist.

## Patentansprüche

1. Verankerungspatrone mit einem Zweikomponentenkleber aus einem Harz (6) und einem Härter, mit einer die erste Komponente (6) enthaltenden rohrförmigen Innenpatrone (5, 35), die von einer koaxial fixierten, einen Füllstoff (10) und die zweite Komponente enthaltenden rohrförmigen Außenpatrone (3, 33) umgeben ist, wobei das vordere Ende (9) der Innenpatrone (5, 35) in einem vorgegebenen Abstand von dem vorderen Ende (1) der Außenpatrone (3, 33) endet, **dadurch gekennzeichnet**, daß der Härter und der Füllstoff (10) im vorderen Bereich (12) des Ringspaltes (11) zwischen der mit Harz (6) gefüllten Innenpatrone (5, 35) und der Außenpatrone (3, 33) mit einer feineren Körnung als im hinteren Bereich (13) des Ringspaltes (11) vorgesehen sind und daß der Ringspalt (11) im vorderen Bereich (12) zwei- bis dreimal und im hinteren Bereich (13) ein- bis dreimal so groß wie die Korngröße des Füllstoffes (10) ist.

2. Verankerungspatrone nach Anspruch 1, dadurch gekennzeichnet, daß die Fixierung des hinteren Endes (8) der Innenpatrone (5) in der Außenpatrone (3) durch eine thermisch behandelte Füllstoffschicht (15) erfolgt.

3. Verankerungspatrone nach Anspruch 1 oder Anspruch 2, dadurch gekennzeichnet, daß die Fixierung des hinteren Endes der Innenpatrone (5, 35) durch eine in die Außenpatrone (3, 33) eingeklemmte Abschlußkappe (23, 43) erfolgt, die in die Außenpatrone (3, 33) hineinragt und mit einem Boden (25, 49) gegen die Fixierungsschicht des Füllstoffes (10) angedrückt ist.

4. Verankerungspatrone nach einem der Ansprüche 1 bis 3, dadurch gekennzeichnet, daß in das hintere Ende der Außenpatrone (3, 33) eine Abschlußkappe (23, 43) eingesteckt ist, die über einen radial überstehenden Anschlagring (17, 47) verfügt.

5. Verankerungspatrone nach Anspruch 1, dadurch gekennzeichnet, daß die rückseitigen Enden der Innenpatrone (35) und der Außenpatrone (33) durch eine gemeinsame Abschlußkappe (43) verschlossen sind.

6. Verankerungspatrone nach Anspruch 5, dadurch gekennzeichnet, daß die Abschlußkappe (43) einen gegen die Innenwand der Innenpatrone (35) anliegenden inneren Rohrstutzen (51) und einen gegen die Innenwand oder Außenwand der Außenpatrone (33) anliegenden äußeren Rohrstutzen (50) aufweist.

7. Verankerungspatrone nach einem der Ansprüche 3 bis 6, dadurch gekennzeichnet, daß die Abschlußkappe (16, 23, 43) über radial verlaufende Sollbruchlinien (21) verfügt.

## Claims

1. An anchoring cartridge having a two-component adhesive comprising a resin (6) and a hardener, comprising a tubular inner cartridge (5, 35) which contains the first component (6) and which is surrounded by a coaxially fixed tubular outer cartridge (3, 33) which contains a filler (10) and the second component, wherein the front end (9) of the inner cartridge (5, 35) terminates at a predetermined spacing from the front end (1) of the outer cartridge (3, 33), characterised in that the hardener and the filler (10) in the front region (12) of the annular gap (11) between the inner cartridge (5, 35) filled with resin (6) and the outer cartridge (3, 33) are provided with a finer grain size than in the rear region (13) of the annular gap (11) and that the annular gap (11) is twice to three times the grain size of the filler (10) in the front region (12) and once to three times the grain size of the filler (10) in the rear region (13).

2. An anchoring cartridge according to claim 1 characterized in that the fixing of the rear end (8) of the inner cartridge (5) is effected in the outer cartridge (3) by a heat-treated filler layer (15).

3. An anchoring cartridge according to claim 1 or claim 2 characterized in that fixing of the rear end of the inner cartridge (5, 35) is effected by a closure cap (22, 43) which is jammed into the outer cartridge (3, 33) and which projects into the outer cartridge (3, 33) and which is pressed with an end portion (25, 49) against the fixing layer of the filler (10).

4. An anchoring cartridge according to one of claims 1 to 3 characterized in that a closure cap (23, 43) is inserted into the end of the outer cartridge (3, 33) and has a radially projecting stop ring (17, 47).

5. An anchoring cartridge according to claim 1 characterised in that the rearward ends of the inner cartridge (35) and the outer cartridge (33) are closed by a common closure cap (43).

6. An anchoring cartridge according to claim 5 characterised in that the closure cap (43) has an inner tubular portion (51) which bears against the inside wall of the inner cartridge (35) and an outer tubular portion (50) which bears against the inside wall or the outside wall of the outer cartridge (33).

7. An anchoring cartridge according to one of claims 3 to 6 characterised in that the closure cap (16, 23, 43) has radially extending desired-fracture lines (21).

## Revendications

1. Cartouche d'ancrage comportant une colle à deux constituants formée par une résine (6) et un durcisseur, et comportant une cartouche intérieure tubulaire (5, 35) contenant le premier constituant (6) et qui est entourée par une cartouche extérieure tubulaire (3,33), fixée coaxialement et contenant une charge de remplissage (10) et le second constituant, l'extrémité avant (9) de la cartouche intérieure (5,35) se terminant à une distance prédéterminée de l'extrémité avant (1) de la cartouche extérieure (3,33), caractérisée en ce que le durcisseur et la charge de remplissage (10) sont prévus dans la zone avant (12) de la fente annulaire (11) entre la cartouche intérieure (5,35) remplie par la résine (6) et la cartouche extérieure (3,33) possédant une granulation plus fine que dans la zone arrière (13) de la fente annulaire (11), et que dans la zone avant (12), la fente annulaire (11) possède une taille deux à trois fois supérieure à la taille des grains de la charge de remplissage (10) et, dans la zone arrière (13), possède une taille une à trois fois supérieure à la taille des grains de la charge de remplissage (10).

2. Cartouche d'ancrage selon la revendication 1, caractérisée en ce que la fixation de l'extrémité arrière (8) de la cartouche intérieure (5) dans la cartouche extérieure (3) est réalisée au moyen d'une couche (15) de la charge de remplissage, traitée thermiquement.

3. Cartouche d'ancrage selon la revendication 1 ou 2, caractérisée en ce que la fixation de l'extrémité arrière de la cartouche intérieure (5,35) est réalisée au moyen d'un capuchon de fermeture (23,43) bloqué dans la cartouche extérieure (3,33) et qui pénètre dans cette cartouche et est repoussée, par un fond (25,49), contre la couche de fixation de la charge de remplissage (10).

4. Cartouche d'ancrage selon l'une des revendications 1 à 3, caractérisée par le fait que dans l'extrémité arrière de la cartouche extérieure (3,33) est enfiché un capuchon de fermeture (23,43), qui possède une bague de butée (17,47), qui fait saillie radialement.

5. Cartouche d'ancrage selon la revendication 1, caractérisée par le fait que les extrémités arrière de la cartouche intérieure (35) et de la cartouche extérieure (33) sont fermées par un capuchon commun de fermeture (43).

6. Cartouche d'ancrage selon la revendication 6, caractérisée par le fait que le capuchon de fermeture (43) possède un embout tubulaire intérieur (51), qui s'applique contre la paroi intérieure de la cartouche intérieure (35), et un embout tubulaire extérieur (50), qui s'applique contre la paroi intérieure ou la paroi extérieure de la cartouche extérieure (33).

7. Cartouche d'ancrage selon l'une des revendications 3 à 6, caractérisée par le fait que le capuchon de fermeture (16,23,43) comporte des lignes radiales de rupture de consigne (21).
